# FASCICULE DE BREVET EUROPEEN

(11) **EP 3 454 305 B1**
(45) Date de publication et mention de la délivrance du brevet: **12.02.2025**
(21) Numéro de dépôt: 18193187.4
(22) Date de dépôt: 07.09.2018
(51) Int. Cl.: G07B 15/02, B64D 9/00, G06Q 50/00, G07C 9/00

(54) **DISPOSITIF DE GESTION DE VOYAGEURS ET DE BAGAGES POUR UN VÉHICULE FERROVIAIRE**
VORRICHTUNG ZUR VERWALTUNG VON REISENDEN UND GEPÄCKSTÜCKEN FÜR EIN SCHIENENFAHRZEUG
DEVICE FOR MANAGING PASSENGERS AND BAGGAGE FOR A RAILWAY VEHICLE

(30) Priorité: 07.09.2017 FR 1758261
(43) Date de publication de la demande: 13.03.2019
(73) Titulaire: ALSTOM Holdings, 93400 Saint-Ouen-sur-Seine (FR)
(72) Inventeur: PHEULPIN, Jean-François, 67000 STRASBOURG (FR); LE-CORRE, Dominique, 67350 PFAFFENHOFFEN (FR)
(74) Mandataire: Lavoix

(56) Documents cités:
- EP-A1- 1 104 919
- WO-A1-03/096282
- WO-A2-03/065257
- CN-A- 101 241 610
- US-B1- 7 030 760

## Description

La présente invention concerne un dispositif de gestion de voyageurs et de bagages pour un véhicule ferroviaire.

Des voyageurs empruntant un véhicule ferroviaire peuvent rencontrer diverses situations problématiques.

En particulier, il peut arriver qu'un bagage soit volé ou qu'un voyageur oublie un bagage lorsqu'il descend en station. Il peut également arriver qu'un voyageur monte dans un véhicule ferroviaire qui n'est pas celui pour lequel il avait réservé, ou qu'un voyageur descende à une mauvaise station.

Le document US 7 030 760 décrit un exemple de dispositif de gestion de voyageurs et de bagages. Le document CN101241610A décrit également un dispositif de gestion de voyageurs et de bagages et notamment la détection de vol des bagages.

La présente invention a notamment pour but de remédier à ce genre de problématique, en proposant un dispositif de gestion de voyageurs adapté pour empêcher de tels incidents, entre autres avantages.

A cet effet, l'invention a notamment pour objet un dispositif de gestion de voyageurs et de bagages selon la revendication 1.

Le dispositif de gestion selon l'invention permet de connaitre la localisation de chaque voyageur et de ses bagages, en observant les passages des étiquettes électroniques à travers les portiques. Il est alors possible d'envoyer une alerte à un voyageur, notamment lorsqu'il est concerné par l'un des problèmes évoqués précédemment.

Un dispositif de gestion selon l'invention peut comporter en outre l'une ou plusieurs des caractéristiques suivantes, prises seules ou selon toutes combinaisons techniquement envisageables.
- La pluralité de portiques électroniques comporte au moins un second portique électronique agencé à chaque passage d'intercirculation entre deux voitures adjacentes du véhicule ferroviaire.
- La pluralité de portiques électroniques comporte au moins un troisième portique électronique agencé sur un quai où le véhicule ferroviaire est destiné à stationner, notamment en entrée ou sortie de ce quai.
- Chaque portique électronique est configuré pour déterminer un sens de passage de chaque étiquette électronique franchissant ce portique électronique, les moyens de transmission étant configurés pour transmettre une information concernant ce sens de passage, avec l'identifiant de l'étiquette électronique correspondante.
- Le dispositif de gestion comporte des terminaux portés par chaque voyageur, par exemple des smartphones, les moyens d'émission d'alertes étant configurés pour émettre les alertes à destination des terminaux correspondants.
- Chaque étiquette électronique est une radio-étiquette selon la technologie de radio-identification RFID.
- Chaque étiquette électronique est associée à au moins l'une des informations suivantes : - s'il s'agit d'une étiquette électronique propre à un voyageur ou à un bagage, - une identité d'au moins un voyageur associé à l'étiquette électronique, et - des informations de trajet, en particulier le véhicule ferroviaire devant être emprunté par l'étiquette électronique et/ou la station d'arrivée à laquelle l'étiquette électronique doit sortir du véhicule ferroviaire.
- Le système de gestion est configuré pour effectuer au moins l'une des tâches suivantes : - compter le nombre de voyageurs et/ou de bagages dans chaque voiture du véhicule ferroviaire, - localiser chaque voyageur et/ou chaque bagage dans le véhicule ferroviaire, - informer un opérateur lorsqu'une étiquette électronique propre à un bagage est éloignée d'une étiquette électronique propre au voyageur associé.

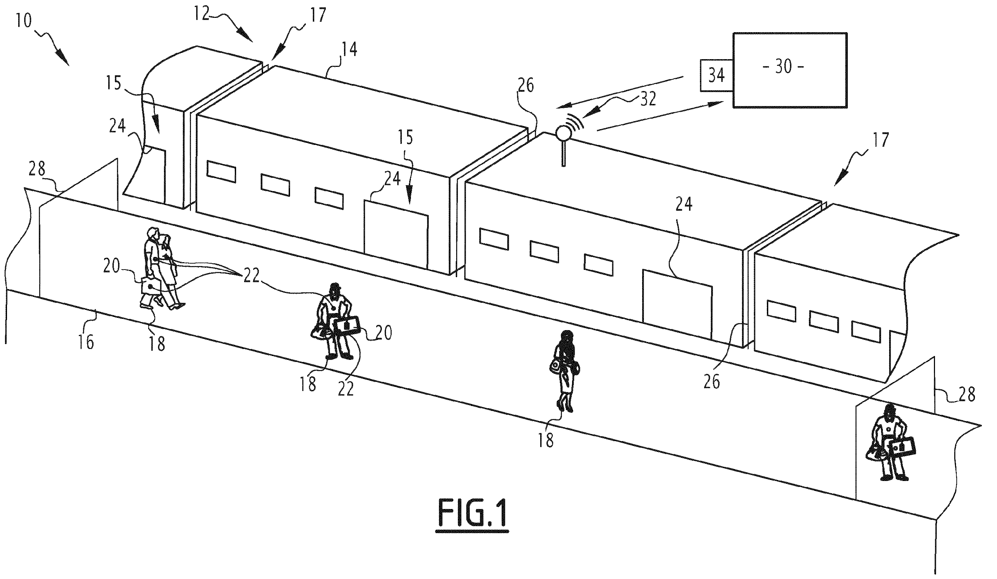

L'invention sera mieux comprise à la lecture de la description qui va suivre, donnée uniquement à titre d'exemple et faite en se référant à la figure unique annexée représentant schématiquement un véhicule ferroviaire équipé d'un dispositif de gestion selon un exemple de mode de réalisation de l'invention.

On a représenté sur la figure un dispositif de gestion de voyageurs, désigné par la référence générale 10.

Le dispositif de gestion de voyageurs 10 est associé à au moins un véhicule ferroviaire 12. Le véhicule ferroviaire 12 comporte par exemple, de manière classique, une pluralité de voitures 14 alignées. Sur la figure, le véhicule ferroviaire 12 est représenté stationnant auprès d'un quai 16.

Chaque voiture 14 comporte au moins une porte d'accès 15, permettant d'accéder à l'intérieur de la voiture 14 depuis l'extérieur du véhicule ferroviaire 12. Par ailleurs, chaque voiture 14 est accessible depuis au moins l'une des voitures qui lui sont adjacentes au travers d'un passage d'intercirculation 17 respectif. Pour chaque voiture 14, la porte d'accès 15 et le passage d'intercirculation 17 forment des entrées/sorties de cette voiture 14.

Des voyageurs 18 souhaitant emprunter le véhicule ferroviaire 12, circulent sur le quai 16 pour entrer dans le véhicule ferroviaire 12 via l'une des portes d'accès 15. Certains voyageurs 18 emportent avec eux au moins un bagage 20.

Le dispositif de gestion 10 selon l'invention comporte des étiquettes électroniques 22, présentant chacune un identifiant respectif. Chaque étiquette électronique 22 est par exemple une radio-étiquette selon la technologie de radio-identification RFID.

Plus particulièrement, le dispositif de gestion 10 comporte, pour chaque voyageur 18 et pour chaque bagage 20, une étiquette électronique 22 propre à ce voyageur 18 ou à ce bagage 20.

Chaque étiquette électronique 22 est par exemple fournie au voyageur 18 associé lors de la réservation d'une place dans le véhicule ferroviaire 12, en vue de parcourir un trajet.

Diverses informations sont associées à chaque étiquette électronique 22, notamment au moins l'une des informations suivantes :
- Une information selon laquelle l'étiquette électronique 22 est propre à un voyageur 18 ou à un bagage 20.
- Une information indiquant l'identité d'au moins un voyageur 18 associé à l'étiquette électronique 22. En particulier, une étiquette électronique 22 propre à un bagage 20 est associée à au moins un voyageur 18 propriétaire de ce bagage. Conformément à une autre possibilité, une étiquette électronique 22 propre à un voyageur enfant peut être associée à au moins un voyageur 18 accompagnant cet enfant.
- Une information concernant le trajet destiné à être parcouru par l'étiquette électronique 22, notamment le véhicule ferroviaire 12 que l'étiquette électronique 22 doit emprunter, et la station d'arrivée à laquelle l'étiquette électronique 22 doit sortir du véhicule ferroviaire 12.

D'autres informations complémentaires peuvent être en variante associées à chaque étiquette électronique 22, notamment la voiture et la place réservée par le voyageur 18, s'il a réservé en première ou seconde classe, ou toute autre information envisageable.

Le dispositif de gestion 10 comporte par ailleurs une pluralité de portiques électroniques 24, 26, 28, chaque portique électronique étant configuré pour détecter les identifiants des étiquettes électroniques 22 le franchissant.

Avantageusement, chaque portique électronique 24, 26, 28 est également configuré pour déterminer un sens de passage de chaque étiquette électronique 22 franchissant ce portique électronique.

La pluralité de portiques électroniques comporte un premier portique électronique 24 agencé à chaque porte d'accès 15 du véhicule ferroviaire 12. Les premiers portiques électroniques 24 permettent de détecter les étiquettes électroniques 22 entrant et sortant du véhicule ferroviaire 12.

Il est ainsi possible de connaître le nombre de voyageurs 18, ainsi que le nombre de bagages 20, présents dans le véhicule ferroviaire 12, en analysant les entrées et sorties d'étiquettes électroniques 22. A l'aide des identifiants, il est également possible de déterminer qui sont les voyageurs à l'intérieur du véhicule 12.

Avantageusement, la pluralité de portiques électroniques comporte un second portique électronique 26 agencé à chaque passage d'intercirculation 17 entre deux voitures adjacentes 14 du véhicule ferroviaire 12.

Ces seconds portiques électroniques 26 permettent de connaître la position de chaque étiquette électronique 22 dans le véhicule ferroviaire 12, en fonction du premier portique électronique 24 franchi et du ou des éventuels seconds portiques électroniques 26 franchis.

De manière optionnelle, la pluralité de portiques électroniques comporte également des troisièmes portiques électroniques 28 agencés sur le quai 16, et plus particulièrement en entrée et sortie de ce quai 16.

Il est ainsi notamment possible de connaître le nombre de voyageurs 18 et de bagages 20 sur le quai 16.

Le dispositif de gestion 10 comporte par ailleurs un système de gestion central 30. Dans l'exemple décrit, le système de gestion central 30 est agencé à distance, si bien qu'il permet avantageusement la gestion d'une pluralité de véhicules ferroviaires. En variante, le système de gestion central 30 pourrait être agencé dans le véhicule ferroviaire 12.

Le système de gestion central 30 comporte avantageusement des moyens de stockage desdites informations associées à chaque étiquette électronique 22, et des moyens d'analyse de ces informations.

Le dispositif de gestion 10 comporte par ailleurs des moyens 32 de transmission, depuis chaque portique électronique 24, 26, 28 vers le système de gestion central 30, des identifiants des étiquettes électroniques 22 franchissant ce portique électronique 24, 26, 28. Ces moyens de transmission 32 sont par exemple agencés sur le véhicule ferroviaire 12, et communiquent avec chaque portique électronique 24, 26, 28.

Avantageusement, les moyens de transmission 32 sont configurés pour transmettre une information concernant le sens de passage de chaque étiquette électronique 22 franchissant l'un des portiques électroniques 24, 26, 28. Ceci permet de distinguer une entrée dans le véhicule 12, une voiture 14 ou le quai 16, d'une sortie de ce véhicule 12, d'une voiture 14 ou du quai 16.

Le système de gestion central 30 est configuré pour analyser les informations ainsi transmises, notamment pour connaître la présence et la position de chaque étiquette électronique 22, et avantageusement la position relative des étiquettes électroniques 22 associées à un même voyageur 18.

Le dispositif de gestion 10 comporte par ailleurs des moyens 34 d'émission, depuis le système de gestion central 30, d'alertes adressées à chaque voyageur 18 dont au moins une étiquette électronique 22 associée à ce voyageur 18 franchit l'un des portiques électroniques 24, 26, 28.

Le dispositif de gestion 10 comporte avantageusement des terminaux, chaque terminal étant porté par un voyageur 18 respectif, propre à recevoir les alertes relatives à ce voyageur 18. Par exemple, chaque terminal est un smartphone personnel du voyageur 18 correspondant. En variante, chaque terminal peut être formé par un objet électronique dédié fourni à chaque voyageur 18.

Les moyens d'émission d'alertes 34 sont alors configurés pour émettre les alertes aux terminaux correspondants. C'est le système de gestion central 30, en analysant les données reçues, qui détermine si des alertes doivent être émises.

La réception d'une telle alerte permet au voyageur 18 d'être averti d'un problème le concernant, afin de l'aider à y remédier.

Des exemples de cas dans lesquels une alerte est émise sont décrits ci-dessous.

Une alerte est émise lorsqu'une étiquette électronique 22 entre dans le véhicule ferroviaire 12 alors qu'elle n'est pas enregistrée pour ce véhicule ferroviaire 12. Cela est par exemple le cas lorsqu'un voyageur 18 entre dans un véhicule ferroviaire 12 qui n'est pas celui qui était prévu pour son trajet. Une telle alerte peut être émise lorsque l'étiquette électronique 22 franchit l'un des premiers portiques électroniques 24, ou en variante dès qu'elle franchit le troisième portique électronique 28. Il est à noter qu'il est nécessaire de connaître les caractéristiques du trajet prévu pour l'étiquette électronique 22 pour émettre une telle alerte.

Une alerte est émise lorsqu'une étiquette électronique 22 sort du véhicule ferroviaire 12 à une station ne correspondant pas à la station d'arrivée prévue pour cette étiquette électronique 22. Cela est par exemple le cas lorsqu'un voyageur 18 sort du véhicule ferroviaire 12 en se trompant de station d'arrivée. Une telle alerte est émise lorsque l'étiquette électronique 22 franchit l'un des premiers portiques électroniques 24, dans un sens de sortie du véhicule 12. Conformément à un autre exemple, cette alerte peut également être émise lorsqu'un bagage 20 est volé, le bagage 20 descendant alors du véhicule alors que cela n'est pas prévu. Il est à noter qu'il est nécessaire de connaître les caractéristiques du trajet prévu pour l'étiquette électronique 22 pour émettre une telle alerte.

Une alerte est émise lorsqu'une une étiquette électronique 22 associée à un voyageur 18 franchit l'un des portiques séparément de l'étiquette électronique 22 propre à ce voyageur 18. Cela est par exemple le cas lorsqu'un bagage 20, appartenant au voyageur 18, est déplacé sans ce voyageur 18, notamment en cas de vol de ce bagage 20. Cela est également le cas lorsqu'un enfant accompagnant le voyageur 18 se déplace sans ce voyageur 18, par exemple descend du véhicule 12 sans le voyageur 18.

Une alerte est émise lorsque l'étiquette électronique 22 propre à un voyageur 18 sort d'une voiture 14 ou du véhicule ferroviaire 12 séparément d'au moins une autre étiquette électronique 22 associée à ce voyageur. Cela est notamment le cas lorsque le voyageur 18 descend du véhicule 12 en oubliant un bagage 20.

Avantageusement, une alerte est émise lorsque l'étiquette électronique 22 propre à un voyageur 18 entre dans une voiture 14 du véhicule ferroviaire 12, auquel cas l'alerte indique le numéro de la voiture 14 dans laquelle le voyageur 18 se trouve. L'alerte pourrait également préciser le numéro de place qui est réservé au voyageur 18.

Il est à noter que chaque alerte précise avantageusement les raisons de son émission, pour que le voyageur 18 concerné sache directement quel est le problème rencontré.

Le système de gestion 30 peut également être configuré pour effectuer d'autres tâches, notamment à destination d'un opérateur.

Par exemple, le système de gestion 30 peut compter le nombre de voyageurs et/ou de bagages dans chaque voiture 14 du véhicule ferroviaire 12, en fonction des franchissements à travers les premiers 24 et seconds 26 portiques, et les sens de ces franchissements.

Le système de gestion 30 peut également localiser chaque voyageur 18 et/ou chaque bagage 20 dans le véhicule ferroviaire 12, en fonction des franchissements à travers les seconds 26 portiques.

Le système de gestion 30 peut également informer l'opérateur lorsqu'une étiquette électronique 22 propre à un bagage 20 est éloignée d'une étiquette propre au voyageur 18 associé. Un tel bagage peut ainsi être considéré comme un colis suspect.

Il apparait clairement que le dispositif de gestion 10 selon l'invention permet d'empêcher des problèmes liés au vol ou à l'oubli de bagages, et d'éviter des erreurs de trajet de passagers, entre autres avantages.

On notera que le dispositif de gestion 10 selon l'invention n'est pas limité au mode de réalisation précédemment décrit, mais pourrait présenter diverses variantes complémentaires.

En particulier, le dispositif de gestion 10 peut être utilisé pour la gestion d'une pluralité de véhicules ferroviaires.

Il est à noter que le dispositif de gestion 10 selon l'invention ne permet pas de localiser les voyageurs 18 plus que nécessaire, mais seulement à l'intérieur du véhicule ferroviaire 12 ou sur le quai. Le respect de la vie privée des voyageurs 18 est donc conservé.

## Revendications

1. Ensemble d'un véhicule ferroviaire (12) comportant une pluralité de voitures (14), et d'un dispositif (10) de gestion de voyageurs (18) et de bagages (20), le dispositif de gestion comportant :
- pour chaque voyageur (18) et pour chaque bagage (20), une étiquette électronique (22) propre à ce voyageur (18) ou à ce bagage (20), chaque étiquette électronique (22) présentant un identifiant respectif et étant associée à des informations, et chaque étiquette électronique (22) étant en particulier associée à au moins un voyageur (18),
- pour chaque voyageur (18), un terminal portable porté par ce voyageur (18) ;
- une pluralité de portiques électroniques (24, 26, 28), chaque portique électronique (24, 26, 28) étant configuré pour détecter les identifiants des étiquettes électroniques (22) le franchissant,
- un système de gestion central (30), comprenant des moyens d'analyse des informations relatives à chaque étiquette électronique (22),
- des moyens (32) de transmission, depuis chaque portique électronique (24, 26, 28) vers le système de gestion central (30), des identifiants des étiquettes électroniques (22) franchissant ce portique électronique (24, 26, 28),
- des moyens (34) d'émission, depuis le système de gestion central (30), d'alertes adressées au terminal portable de chaque voyageur (18) dont une étiquette électronique (22) associée à ce voyageur (18) franchit un portique électronique (24, 26, 28),
**caractérisé en ce que** chaque porte d'accès (15) de chaque voiture (14) du véhicule ferroviaire (12) comporte l'un (24) des portiques électroniques (24, 26, 28),
et **en ce que** le système de gestion central (30) est configuré pour que les moyens d'émission d'alertes (32) émettent une alerte dans chacun des cas suivants :
- une étiquette électronique (22) entre dans le véhicule ferroviaire (12) alors qu'elle n'est pas enregistrée pour ce véhicule ferroviaire (12),
- une étiquette électronique (22) sort du véhicule ferroviaire (12) à une station ne correspondant pas à une station d'arrivée prévue pour cette étiquette électronique (22),
- une étiquette électronique (22) associée à un voyageur (18) franchit un portique électronique (24, 26, 28) séparément de l'étiquette électronique (22) propre à ce voyageur (18),
- l'étiquette électronique (22) propre à un voyageur (22) sort d'une voiture (14) ou du véhicule ferroviaire (12) séparément d'au moins une autre étiquette électronique (22) associée à ce voyageur (22),
- l'étiquette électronique (22) propre à un voyageur (18) entre dans une voiture (14) du véhicule ferroviaire (12), auquel cas l'alerte indique un numéro de la voiture (14) correspondante.

2. Ensemble selon la revendication 1, comprenant des passages d'intercirculation (17) entre les voitures (14) de chaque paire de deux voitures adjacentes, chaque passage d'intercirculation (17) comprenant au moins l'un (26) des portiques électroniques.

3. Ensemble selon la revendication 1 ou 2, dans lequel l'un (28) des portiques électroniques (24, 26, 28) est agencé sur un quai (16) où le véhicule ferroviaire (12) est destiné à stationner, notamment en entrée ou sortie de ce quai (16).

4. Ensemble selon l'une quelconque des revendications précédentes, dans lequel chaque portique électronique (24, 26, 28) est configuré pour déterminer un sens de passage de chaque étiquette électronique (22) franchissant ce portique électronique (24, 26, 28), les moyens de transmission (32) étant configurés pour transmettre une information concernant ce sens de passage, avec l'identifiant de l'étiquette électronique (22) correspondante.

5. Ensemble selon l'une quelconque des revendications précédentes, dans lequel les terminaux sont des smartphones.

6. Ensemble selon l'une quelconque des revendications précédentes, dans lequel chaque étiquette électronique (22) est une radio-étiquette selon la technologie de radio-identification RFID.

7. Ensemble selon l'une quelconque des revendications précédentes, dans lequel chaque étiquette électronique (22) est associée à au moins l'une des informations suivantes :
- s'il s'agit d'une étiquette électronique (22) propre à un voyageur (18) ou à un bagage (20),
- une identité d'au moins un voyageur (18) associé à l'étiquette électronique (22),
- des informations de trajet, en particulier le véhicule ferroviaire (12) devant être emprunté par l'étiquette électronique (22) et/ou la station d'arrivée à laquelle l'étiquette électronique (22) doit sortir du véhicule ferroviaire (12).

8. Ensemble selon l'une quelconque des revendications précédentes, dans lequel le système de gestion (30) est configuré pour effectuer au moins l'une des tâches suivantes :
- compter le nombre de voyageurs (18) et/ou de bagages (20) dans chaque voiture (14) du véhicule ferroviaire,
- localiser chaque voyageur (18) et/ou chaque bagage (20) dans le véhicule ferroviaire (12),
- informer un opérateur lorsqu'une étiquette électronique (22) propre à un bagage (20) est éloignée d'une étiquette électronique (22) propre au voyageur (18) associé.

## Patentansprüche

1. Anordnung eines Schienenfahrzeugs (12), umfassend eine Vielzahl von Wagen (14) und eine Verwaltungsvorrichtung (10) von Fahrgästen (18) und Gepäckstücken (20), die Verwaltungsvorrichtung umfassend:
- für jeden Fahrgast (18) und für jedes Gepäckstück (20) ein elektronisches Etikett (22), das für diesen Fahrgast (18) oder dieses Gepäckstück (20) spezifisch ist, wobei jedes elektronische Etikett (22) einen jeweiligen Identifikator aufweist und mit Informationen assoziiert ist, und jedes elektronische Etikett (22) insbesondere mit mindestens einem Fahrgast (18) assoziiert ist,
- für jeden Fahrgast (18) ein tragbares Endgerät, das von diesem Fahrgast (18) getragen wird;
- eine Vielzahl von elektronischen Portalen (24, 26, 28), wobei jedes elektronische Portal (24, 26, 28) konfiguriert ist, um die Identifikatoren der elektronischen Etiketten (22), die es passieren, zu erfassen,
- ein zentrales Verwaltungssystem (30), umfassend Einrichtungen zur Analyse von Informationen in Bezug auf jedes elektronische Etikett (22),
- Einrichtungen (32) zur Übertragung, von jedem elektronischen Portal (24, 26, 28) zu dem zentralen Verwaltungssystem (30), der Identifikatoren der elektronischen Etiketten (22), die dieses elektronische Portal (24, 26, 28) passieren,
- Einrichtungen (34) zur Emission, von dem zentralen Verwaltungssystem (30), von Warnungen, die an das tragbare Endgerät von jedem Fahrgast (18) gerichtet sind, von dem ein elektronisches Etikett (22), das mit diesem Fahrgast (18) assoziiert ist, ein elektronisches Portal (24, 26, 28) passiert,
**dadurch gekennzeichnet, dass** jede Zugangstür (15) von jedem Wagen (14) des Schienenfahrzeugs (12) eines (24) der elektronischen Portale (24, 26, 28) umfasst,
und dadurch, dass das zentrale Verwaltungssystem (30) konfiguriert ist, um die Einrichtungen zur Emission von Warnungen (32) in jedem der folgenden Fälle eine Warnung auszugeben:
- ein elektronisches Etikett (22) tritt in das Schienenfahrzeug (12) ein, obwohl es nicht für dieses Schienenfahrzeug (12) registriert ist,
- ein elektronisches Etikett (22) verlässt das Schienenfahrzeug (12) an einer Station, die keiner Ankunftsstation entspricht, die für dieses elektronische Etikett (22) vorgesehen ist,
- ein elektronisches Etikett (22), das mit einem Fahrgast (18) assoziiert ist, passiert ein elektronisches Portal (24, 26, 28) getrennt von dem elektronischen Etikett (22), das diesem Fahrgast (18) eigen ist,
- das elektronische Etikett (22), das einem Fahrgast (22) eigen ist, verlässt einen Wagen (14) oder das Schienenfahrzeug (12) getrennt von mindestens einem anderen elektronischen Etikett (22), das mit diesem Fahrgast (22) assoziiert ist,
- das elektronische Etikett (22), das einem Fahrgast (18) eigen ist, tritt in einen Wagen (14) des Schienenfahrzeugs (12) ein, in welchem Fall die Warnung eine Nummer des entsprechenden Wagens (14) angibt.

2. Anordnung nach Anspruch 1, umfassend Durchgänge (17) zwischen den Wagen (14) von jedem Paar von zwei benachbarten Wagen, wobei jeder Durchgang (17) mindestens eines (26) der elektronischen Portale umfasst.

3. Anordnung nach Anspruch 1 oder 2, wobei eines (28) der elektronischen Portale (24, 26, 28) an einem Bahnsteig (16) angeordnet ist, an dem das Schienenfahrzeug (12) halten soll, insbesondere an dem Eingang oder Ausgang dieses Bahnsteigs (16).

4. Anordnung nach einem der vorherigen Ansprüche, wobei jedes elektronische Portal (24, 26, 28) konfiguriert ist, um eine Durchgangsrichtung von jedem elektronischen Etikett (22) zu bestimmen, das dieses elektronische Portal (24, 26, 28) passiert, wobei die Übertragungseinrichtung (32) konfiguriert ist, um Informationen über diese Durchgangsrichtung zusammen mit dem Identifikator des entsprechenden elektronischen Etiketts (22) zu übertragen.

5. Anordnung nach einem der vorherigen Ansprüche, wobei die Endgeräte Smartphones sind.

6. Anordnung nach einem der vorherigen Ansprüche, wobei jedes elektronische Etikett (22) ein Funketikett gemäß der RFID-Funkidentifizierungstechnologie ist.

7. Anordnung nach einem der vorherigen Ansprüche, wobei jedes elektronische Etikett (22) mit mindestens einer der folgenden Informationen assoziiert ist:
- ob es sich um ein elektronisches Etikett (22) handelt, das einem Fahrgast (18) oder einem Gepäckstück (20) eigen ist,
- einer Identität von mindestens einem Fahrgast (18), der mit dem elektronischen Etikett (22) assoziiert ist,
- Streckeninformationen, insbesondere das Schienenfahrzeug (12), das von dem elektronischen Etikett (22) benutzt werden soll, und/oder die Ankunftsstation, an der das elektronische Etikett (22) das Schienenfahrzeug (12) verlassen soll.

8. Anordnung nach einem der vorherigen Ansprüche, wobei das Verwaltungssystem (30) konfiguriert ist, um mindestens eine der folgenden Aufgaben auszuführen:
- Zählen der Anzahl der Fahrgäste (18) und/oder der Gepäckstücke (20) in jedem Wagen (14) des Schienenfahrzeugs,
- Lokalisieren von jedem Fahrgast (18) und/oder jedem Gepäckstück (20) in dem Schienenfahrzeug (12),
- Informieren eines Bedieners, wenn ein elektronisches Etikett (22), der einem Gepäckstück (20) eigen ist, von einem elektronischen Etikett (22), der dem assoziierten Fahrgast (18) eigen ist, entfernt ist.

## Claims

1. An assembly of a railway vehicle (12) comprising a plurality of cars (14), and a device (10) for managing travelers (18) and baggage (20), the management device comprising:
- for each traveler (18) and for each piece of baggage (20), an electronic tag (22) specific to this traveler (18) or this piece of baggage (20), each electronic tag (22) having a respective identifier and being associated with information, and each electronic tag (22) in particular being associated with at least one traveler (18),
- for each traveler (18), a portable terminal carried by this traveler (18);
- a plurality of electronic gantries (24, 26, 28), each gantry (24, 26, 28) being configured to detect the identifiers of the electronic tags (22) crossing it,
- a central management system (30) comprising means for analyzing information relating to each electronic tag (22),
- means (32) for transmitting, from each electronic gantry (24, 26, 28) to the central management system (30), identifiers of the electronic tags (22) crossing this electronic gantry (24, 26, 28),
- means (34) for transmitting, from the central management system (30), alerts addressed to the portable terminal of each traveler (18) whose electronic tag (22) associated with this traveler (18) crosses an electronic gantry (24, 26, 28),
**characterized in that** each access door (15) of each car (14) of the railway vehicle (12) comprises one (24) of the electronic gantries (24, 26, 28),
and **in that** the central management system (30) is configured so that the alert issuing means (32) issue an alert in each of the following cases:
- an electronic tag (22) enters the railway vehicle (12) while it is not registered for this railway vehicle (12),
- an electronic tag (22) leaves the railway vehicle (12) at a station that does not correspond to an arrival station provided for this electronic tag (22),
- an electronic tag (22) associated with a traveler (18) crosses an electronic gantry (24, 26, 28) separately from the electronic tag (22) specific to this traveler (18),
- the electronic tag (22) specific to a traveler (22) leaves a car (14) or the railway vehicle (12) separately from at least one other electronic tag (22) associated with this traveler (22),
the electronic tag (22) specific to a traveler (18) enters a car (14) of the railway vehicle (12), in which case the alert indicates a number of the corresponding car (14).

2. The assembly according to claim 1, comprising gangways (17) between the cars (14) of each pair of two adjacent cars, each gangway (17) comprising at least one (26) of the electronic gantries.

3. The assembly according to claim 1 or 2, wherein one (28) of the electronic gantries (24, 26, 28) is arranged on a platform (16) where the railway vehicle (12) is intended to park, in particular at the entrance or exit of this platform (16).

4. The assembly according to any one of the preceding claims, wherein each electronic gantry (24, 26, 28) is configured to determine a direction of passage of each electronic tag (22) crossing this electronic gantry (24, 26, 28), the transmission means (32) being configured to transmit information concerning this direction of passage, with the identifier of the corresponding electronic tag (22).

5. The assembly according to any one of the preceding claims, wherein the terminals are smartphones.

6. The assembly according to any one of the preceding claims, wherein each electronic tag (22) is a radio-tag according to the RFID radio-identification technology.

7. The assembly according to any one of the preceding claims, wherein each electronic tag (22) is associated with at least one of the following information items:
- if it is an electronic tag (22) specific to a traveler (18) or baggage (20),
- an identity of at least one traveler (18) associated with the electronic tag (22),
- journey information, in particular the railway vehicle (12) to be taken by the electronic tag (22) and/or the arrival station at which the electronic tag (22) must leave the railway vehicle (12).

8. The assembly according to any one of the preceding claims, wherein the management system (30) is configured to perform at least one of the following tasks:
- counting the number of travelers (18) and/or pieces of baggage (20) in each car (14) of the railway vehicle,
- locating each traveler (18) and/or each piece of baggage (20) in the railway vehicle (12),
- informing an operator when an electronic tag (22) specific to a piece of baggage (20) is remote from an electronic tag (22) specific to the associated traveler (18).
